# FASCICULE DE BREVET EUROPEEN

(11) **EP 0 644 717 B1**
(45) Date de publication et mention de la délivrance du brevet: **18.03.1998**
(21) Numéro de dépôt: 94913142.9
(22) Date de dépôt: 06.04.1994
(51) Int. Cl.: A22C 21/02

(54) **INSTALLATION SUPPORT DE PLUMEUSE A SEC DE VOLAILLES**
UNTERSTÜTZUNG FÜR VORRICHTUNG ZUM RUPFEN VON GEFLÜGEL
SUPPORTING APPARATUS FOR DRY PLUCKING POULTRY

(30) Priorité: 06.04.1993 FR 9304394
(43) Date de publication de la demande: 29.03.1995
(73) Titulaire: ETABLISSEMENTS J.P. BAYLE S.A., F-42480 La Fouillouse (FR)
(72) Inventeur: BAYLE, Jean-Louis, F-42480 La Fouillouse (FR); THIMONIER, Renaud, F-42230 Roche-La-Molière (FR)
(74) Mandataire: Dupuis, François
(86) Numéro de dépôt international: FR9400385
(87) Numéro de publication internationale: WO9422316

(56) Documents cités:
- EP-A- 0 294 870
- FR-A- 1 549 024
- FR-A- 2 428 981
- GB-A- 813 689
- GB-A- 2 098 454
- US-A- 2 469 345
- US-A- 2 603 831
- US-A- 2 743 477
- US-A- 2 782 457
- US-A- 3 453 683
- US-A- 4 064 596
- US-A- 5 106 333

## Description

L'invention se rattache au secteur technique des matériels et équipements pour plumer les volailles.

Il est connu de réaliser des appareils et matériels pour effectuer le plumage de volailles par système à sec, sans préparation, directement après le saignage des volailles. Ces appareils et matériels exploités par le demandeur, depuis de très nombreuses années, sont notamment décrits dans le brevet français n° 2.563.971. Pour assurer l'arrachage des plumes et duvet, avec les machines à plumer la volaille, on utilise des blocs plumeurs, comprenant une pluralité de disques montés sur un arbre actionné par un bloc moteur, les disques tournant dans un mouvement alternatif de rapprochement et d'éloignement pour permettre successivement les opérations de pinçage des plumes et duvet, puis arrachage en vue de leur évacuation vers l'arrière, en combinaison avec une ventilation appropriée permettant de créer un mouvement d'air approprié pour un tel effet. Les blocs plumeurs sont généralement positionnés sur une structure fixe, tels que tables ou similaires. Ces appareils fonctionnent depuis de nombreuses années avec satisfaction avec des opérateurs qui manipulent des volailles devant les têtes des blocs plumeurs. Par contre, si on veut utiliser les blocs plumeurs au passage des volailles pendues à des convoyeurs d'abattage, on a constaté que les blocs plumeurs ne permettent pas d'assurer un enlèvement des plumes et duvet sur toute la partie du corps de la volaille, par suite d'un positionnement unique et définitif. Or, (es volailles sont toutes différentes les unes des autres dans leur volume et dimensions, de sorte que le degré de finition du plumage est assez variable. Les appareils et matériels sont par ailleurs des ensembles unitaires et indépendants les uns des autres, de sorte que l'on ne peut travailler simultanément différentes lignes de volailles, sauf à multiplier les installations et en restant dans le même plan.

On connaît par le brevet US 2603831 une installation pour le plumage à sec des volailles comprenant un bloc plumeur et une chaîne de distribution et de maintien en suspension de volailles par leur pattes, et sous jacente une chaîne de maintien des cous de volaille fonctionnent en synchronisme.

Le but recherché, selon l'invention, était donc de remédier à ces inconvénients en proposant une installation automatique avec une nouvelle conception dans le positionnement, l'adaptation et le mouvement des blocs plumeurs en permettant ainsi une adaptabilité rapide à chaque type de volailles traitées, à leurs dimensions et volume, et permettant de travailler simultanément avec plusieurs postes de plumage.

Un autre but recherché était d'assurer une présentation des volailles de manière que les blocs plumeurs puissent agir avec le maximum de fiabilité et dans les meilleures conditions de fonctionnement.

Selon une première caractéristique, l'installation est remarquable en en ce qu'elle comprend des moyens (49, 53) disposés à partir de la chaîne (47) de maintien des cous de volailles permettant le positionnement et la mise en tension des volailles, ladite chaîne de maintien des cous de volailles (47) étant agencée avec des moyens complémentaires (56, 57) assurant la tenue des dites volailles en évitant leur débattement latéral, et ce qu'une batterie du bloc plumeur (BP) incluant une grille (30) de protection et d'appui des volailles et disposée en regard des chaînes de maintien et de suspension des volailles, chaque bloc plumeur étant animé d'un mouvement vertical de va-et-vient, le défilement des volailles sous l'action des chaînes devant la batterie des blocs plumeurs étant susceptible en plusieurs phases successives d'assurer un plumage quasi complet de chaque volaille présentée.

Selon une autre caractéristique, chaque bloc plumeur est monté sur un chariot déplaçable en va et vient le long d'un bâti support, avec une capacité d'orientation angulaire contrôlée et limitée.

Ces caractéristiques et d'autres encore ressortiront bien de la suite de la description.
- la figure 1est une vue de côté de l'installation, selon l'invention, en position basse d'un bloc plumeur,
- la figure 2 est une vue de côté semblable à la figure 1 mais en position haute du bloc plumeur,
- la figure 3 est une vue selon la face avant de l'installation illustrant de manière schématique différentes positions du bloc plumeur en hauteur par rapport à la volaille à plumer,

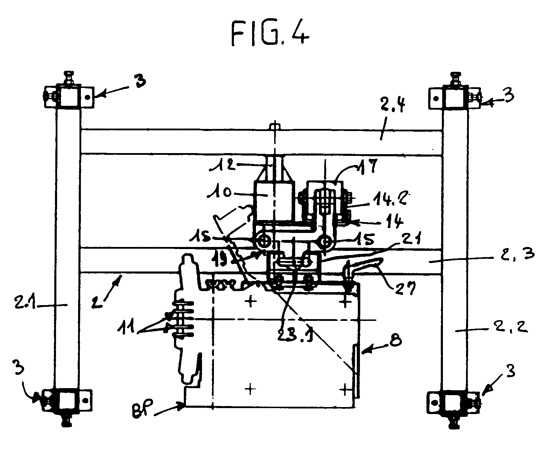

- la figure 4 est une vue en plan de l'installation comprenant un bloc plumeur,

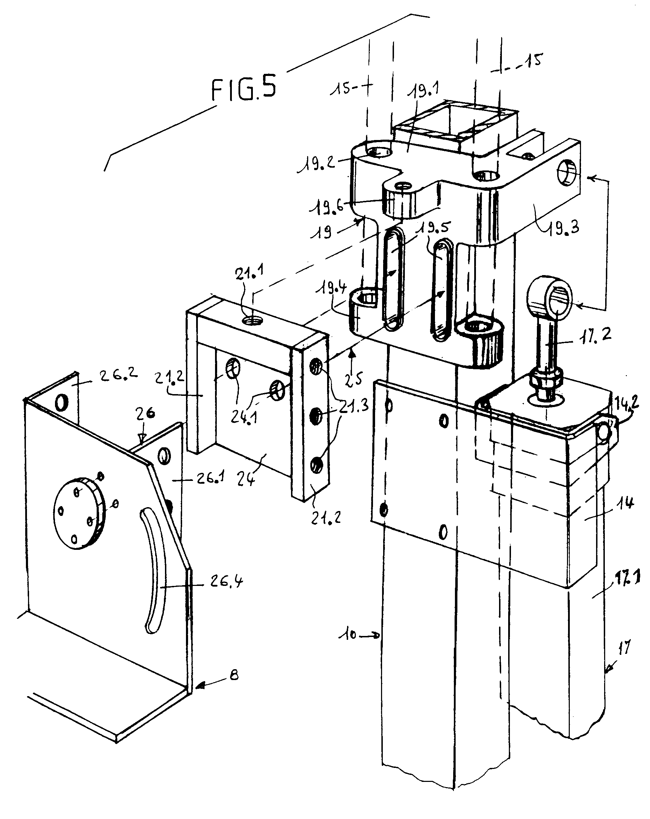

- la figure 5 est une vue partielle, à grande échelle, en vue éclatée, illustrant le chariot associé à l'un des blocs plumeurs,
- la figure 6 est une vue de côté illustrant une installation selon l'invention avec mise en tension des volailles à traiter,
- la figure 7 est une vue en plan d'une batterie de blocs plumeurs dans le cadre d'une installation selon l'invention,
- la figure 8 est une vue illustrant le support d'un bloc plumeur,
- la figure 9 est une vue de côté selon la figure 8,
- la figure 10 est une vue partielle illustrant le positionnement et verrouillage du support de blocs plumeurs,
- la figure 11 est une vue selon la figure 8 illustrant le bloc plumeur en position inclinée,
- la figure 12 est une vue illustrant le réglage en position de l'installation de présentation des volailles en mise en tension.

Afin de rendre plus concret l'objet de l'invention, on le décrit maintenant d'une manière non limitative illustré aux figures des dessins.

L'invention vise une installation présentant une batterie de blocs plumeurs pouvant fonctionner simultanément en synchronisme ou non, en vue d'assurer le plumage d'une volaille présentée, mise en suspension et maintenue en regard desdits blocs. Les blocs plumeurs sont référencés dans leur ensemble par (BP).

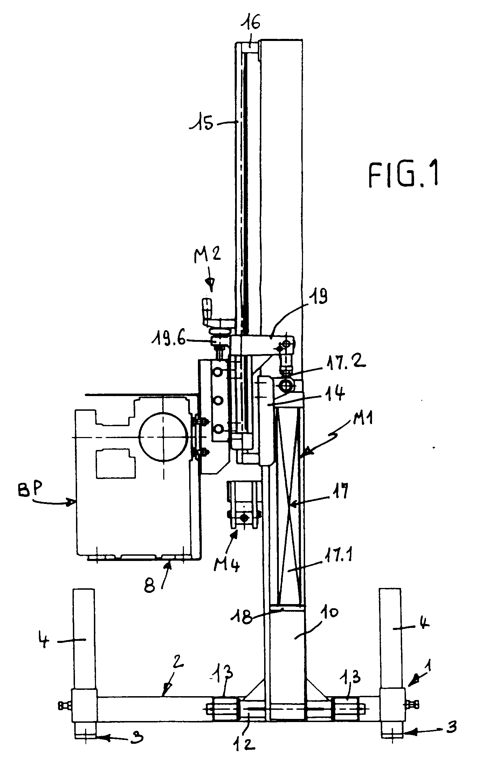

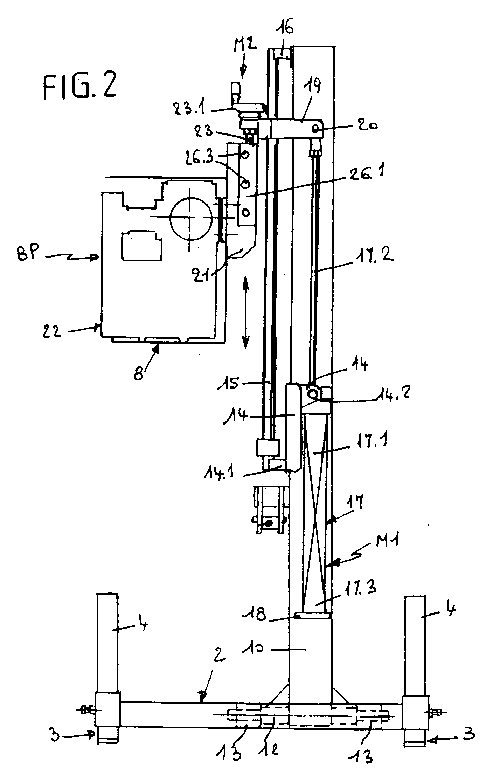

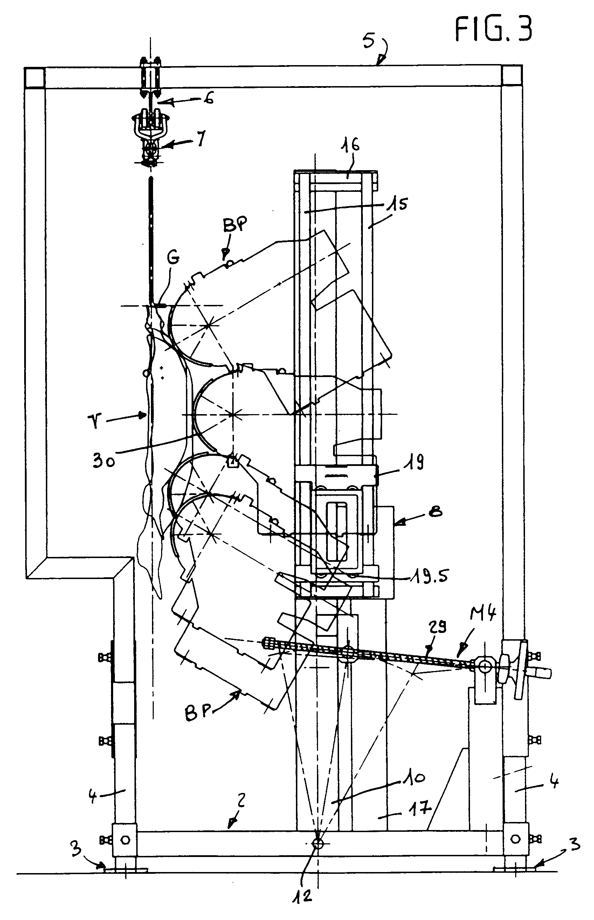

Dans une première mise en oeuvre illustrée aux figures 1, 2 et 3 des dessins, on a illustré une structure support de blocs plumeurs d'une manière non limitative.

Cette structure forme châssis (1) et comprend une base horizontale (2) définie par deux longerons (2.1 - 2.2) entretoisés par deux longerons transversaux (2.3 - 2.4), la base ainsi définie étant montée sur des moyens de roulement (3) ou plans d'appui au sol équivalents. Aux extrémités desdits longerons, sont prévus des montants verticaux (4), définissant un cadre, et entretoisés à leur partie supérieure par des longerons complémentaires (5) susceptibles d'assurer la stabilité de l'ensemble Lesdits longerons supérieurs permettent le positionnement d'une chaîne transporteuse (6) équipée de moyens de suspension (7), connus en soi, autorisant la présentation de volailles (V) destinées à être plumées à sec devant un bloc plumeur. Les volailles sont maintenues par leurs pattes à l'aide de griffes (G) et tous moyens connus associés à la chaîne transporteuse, les volailles présentant leur tête en bas, pour être disposées ainsi devant le bloc plumeur.

Ledit bloc plumeur est disposé sur une ossature support (8) associée à un chariot transporteur (9) coulissant le long d'un portique (10),disposé entre les longerons transversaux formés à la base du châssis. Le bloc plumeur (BP) est, selon l'invention, disposé de manière à pouvoir s'adapter et s'orienter en position, en tenant compte des contraintes spécifiques aux types de volailles traitées, et aux caractéristiques de ces dernières.

Ainsi, ledit bloc plumeur (BP), selon l'invention, est disposé orienté, selon un ou plusieurs axes, d'une manière réglable et pré-établie en fonction des contraintes précitées, et ainsi adapter sa position pour assurer les conditions optimum de plumage de la volaille.

En se référant aux dessins, on voit que le bloc plumeur (BP), qui est réalisé d'une manière connue en soi peut correspondre par exemple non limitativement à celle décrite dans le B.F. n° 2.563.971, et comprend des grilles (30) de protection contre lesquelles viennent en appui par effet d'aspiration le corps des volailles. Le bloc plumeur est solidarisé à une ossature support (8) en étant maintenue par vissage, boulonnage ou autre. L'ossature support forme caisse ou conteneur, et est elle-même fixée sur le chariot (9) coulissant et donc réglable en position par rapport au portique (10) précité. On a représenté par (11), de manière schématique, les disques de pinçage et d'arrachage des plumes et duvet.

Le portique est agencé pour recevoir, d'une manière coulissante, le chariot (9) auquel est solidarisée l'ossature support du bloc plumeur. A cet effet, ledit portique présente, dans sa partie médiane, sensiblement, une embase (14) fixe profilée présentant deux pattes (14.1 - 14.2) disposées en opposition, l'une orientée côté bloc plumeur, et l'autre à l'arrière du portique. La première patte (14.1) est établie de manière à permettre le positionnement en hauteur d'une ou de deux barres de guidage (15) espacées et parallèles entre elles, le long du portique, lesdites barres étant maintenues à leur extrémité supérieure par une patte (16) complémentaire de fixation également associée au portique. L'autre patte (14.2) support disposée sur l'embase (14) présente une forme en étrier pour autoriser la fixation d'un premier moyen (M1) de réglage en hauteur du bloc plumeur. Ce premier moyen est un vérin (17), dont le fût (17.1) est fixé à l'étrier tout en permettant le passage et développement de la tige (17.2) du vérin vers le haut. La partie de fond (17.3) du fût du vérin est positionnée également sur une patte support (18) à une hauteur appropriée sur ledit portique. Les pattes précitées (14.1 - 14.2 - 16 - 18) sont fixées par boulonnage, soudures ou autres.

Le long des barres de guidage (15) est susceptible de se déplacer ledit chariot (9). Ce dernier est constitué par une semelle (19) profilée formant, dans sa partie supérieure plateforme (19.1), disposée en regard du portique. Ladite plateforme est agencée avec des ouvertures (19.2) de passage desdites barres (15) de guidage. La plateforme (19.1) présente, dans sa partie arrière, un talon (19.3) sur lequel est monté et fixé, articulé ou non, avec un axe de liaison (20), l'extrémité de la tige (17.2) du vérin (17), pour permettre la commande en déplacement du chariot le long des barres. Le corps ou fût (17.1) du vérin est maintenu par un bridage (14.2) ou étrier en "U", solidarisé à position fixe sur le portique. En outre, la semelle (19) présente une plaque de prolongement (19.4) vers le bas disposée, de préférence, entre les deux barres (15) de guidage, ladite plaque de prolongement présentant deux lumières oblongues (19.5) verticales, pour autoriser l'ajustement et le positionnement de l'ossature portante (8) du bloc plumeur (BP). En outre, ladite semelle (19) présente, en prolongement avant de sa plateforme (19.1), un déport (19.6) très largement en saillie, par rapport au plan de la plaque verticale (19.4), pour autoriser le positionnement d'un moyen (M2) de réglage de l'ossature portante du bloc plumeur par rapport à ladite semelle. L'ossature portante comprend, par exemple, un étrier (21), profilé en "U", de liaison, à partir duquel est fixé le conteneur support (22) du bloc plumeur (BP). La face supérieure présente une ouverture filetée (21.1) destinée à être en regard du déport (19.6) supérieur formé sur la semelle, en vue d'autoriser l'insertion d'un deuxième moyen de réglage (M2) en hauteur tel que vis (23) avec volant de manoeuvre (23.1). Entre ses branches latérales, l'étrier (21) présente une plaque de fond (24) agencée avec des ouvertures (24.1), autorisant le positionnement de deux axes de liaison (25) ou tirants pénétrant dans les ouvertures oblongues (19.5) précitées formées dans la partie basse de la semelle. Les ailes de l'étrier (21.2) présentent une ou des ouvertures (21.3) pour permettre la fixation, par l'avant, d'une plaque de liaison (26) présentant à cet effet deux rabats (26.1 - 26.2) ou ailes munis d'ouvertures (26.3) complémentaires pour le passage de moyens de fixation. La plaque (26) est susceptible d'assurer la liaison avec l'ossature (8) portante du bloc plumeur. Cet ossature forme caisson et est établie en tôle ou autres matériaux. D'une manière particulière, ladite plaque (26) présente, avantageusement, une lumière oblongue curviligne (26.4), autorisant le passage d'une poignée de liaison et de blocage (27) dont l'extrémité filetée coopère avec un boulonnage disposé par l'intérieur du caisson. Cette disposition permet d'assurer une orientation limitée et contrôlée de l'ossature support du bloc plumeur par rapport au portique. Le degré d'inclinaison est établi de toute manière appropriée. Le bloc plumeur est orienté tel que les disques de pinçage et d'arrachage des plumes et duvet sont disposés vers l'avant en regard de la chaîne de convoyage des volailles.

Ainsi décrit, le bloc plumeur peut être assujetti à un ou plusieurs mouvements.
- un premier mouvement (M1), de réglage en hauteur, donné par le développement de la tige de vérin entraînant le déplacement de chariot le long des barres de guidage,
- un deuxième mouvement (M2) qui consiste dans l'affinage des réglages de l'ossature support du bloc plumeur par rapport au chariot grâce à l'action sur une tige filetée de liaison,
- un troisième mouvement (M3) qui consiste dans le basculement contrôlé, limité de l'ossature support du bloc plumeur par rapport au chariot, dans un mouvement de relevage ou d'abaissement par rapport à l'axe d'articulations données et définies par la poignée de manoeuvre.

Selon une autre disposition importante de l'invention, dans certaines applications, le portique peut lui-même être basculé dans un plan par rapport à son châssis porteur, selon un quatrième mouvement (M4) à l'aide par exemple d'un ensemble à vis filetée (29).

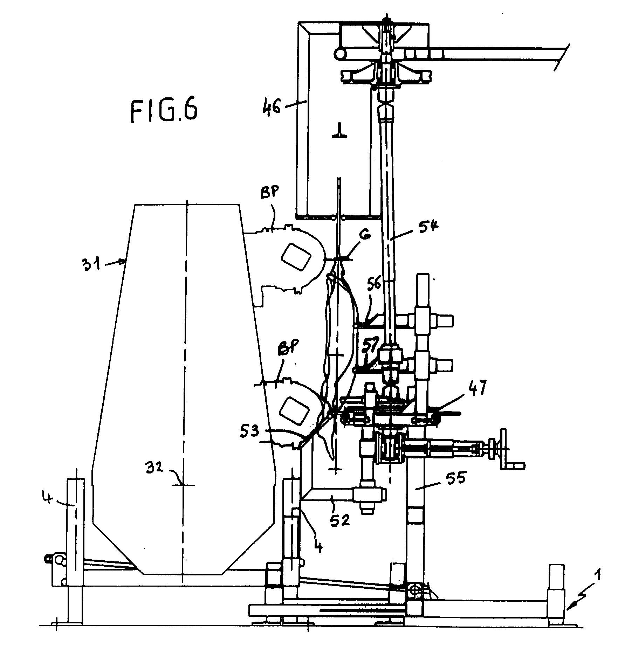

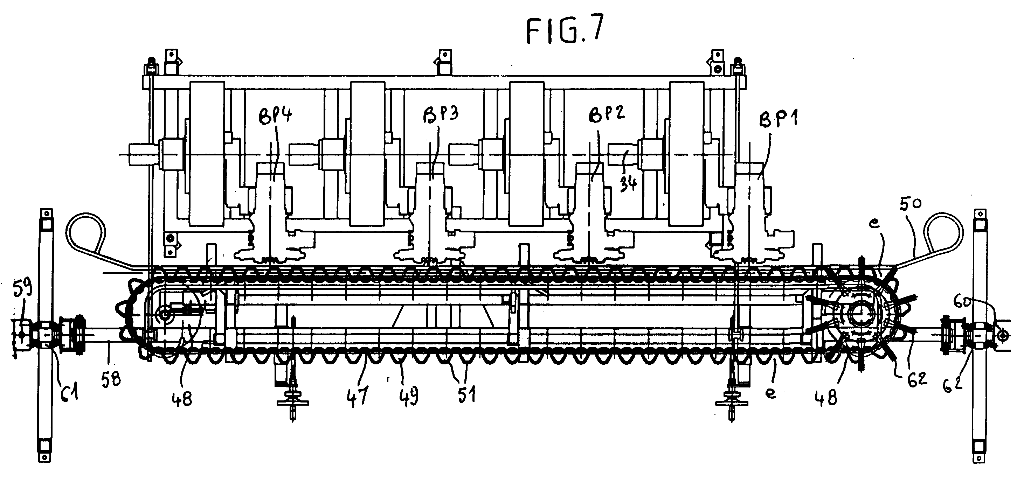

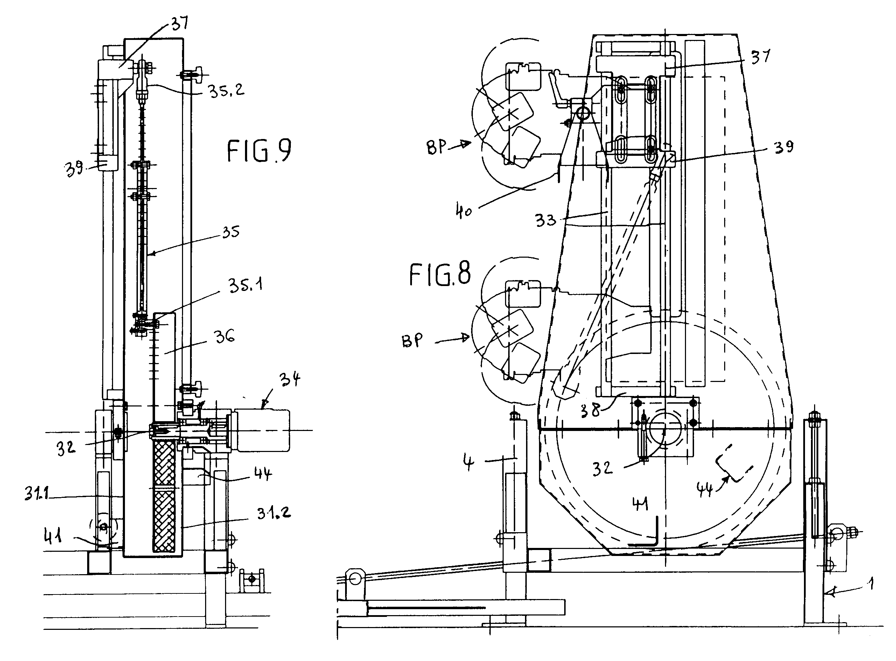

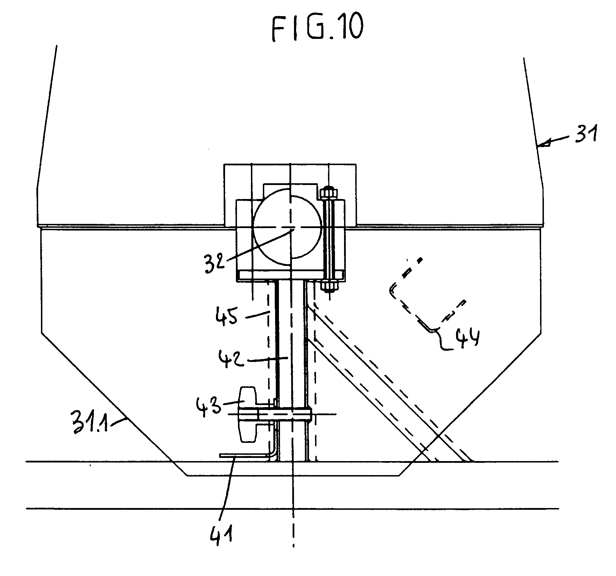

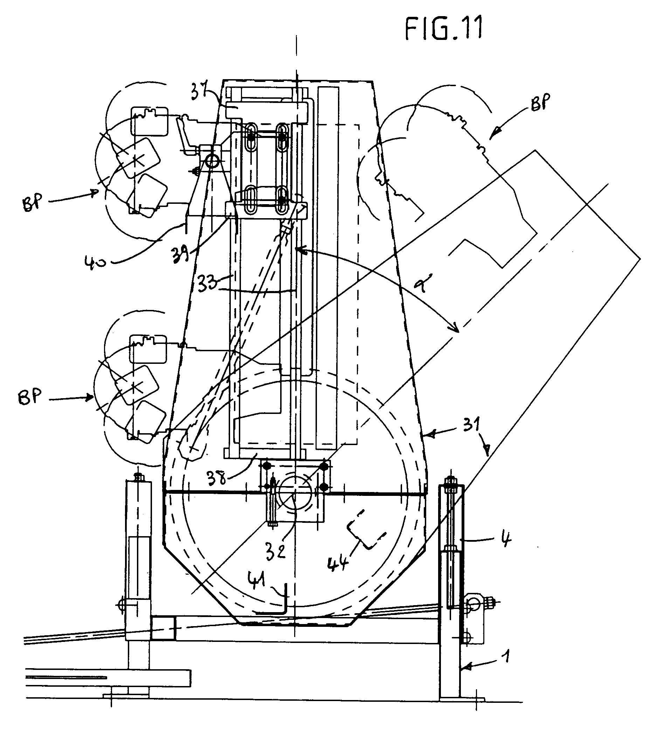

En se référant maintenant aux figures 6 à 12 des dessins, on décrit l'installation de plumage des volailles dans sa mise en oeuvre préférée.

Cette installation comprend une batterie de blocs plumeurs disposés en alignement et en regard de chaînes de convoyage des volailles et notamment de canards, les chaînes permettant la suspension des volailles à leurs pattes et leur mise en tension au niveau de leur cou à l'aide de moyens qui seront décrits par la suite.

La batterie de blocs plumeurs comprend par exemple quatre ensembles (BP1 - BP2 - BP3 - BP4) disposés à partir d'une même structure de bâti (1), chaque bloc plumeur étant disposé à l'intérieur d'un carter de protection (31) profilé présentant une grande hauteur pour autoriser l'insertion d'un bloc plumeur et de ses moyens d'entraînement dans un mouvement de haut en bas en va et vient, en synchronisation avec l'avance des chaînes de convoyage et de maintien des volailles.

On décrira la constitution d'un seul carter de réception d'un bloc plumeur et de sa structure de réception, les autres étant identiques.

Cette structure de réception formant carter (31) est ainsi montée à articulation par rapport à un axe (32) sur un bâti support, cette structure étant creuse intérieurement pour permettre la réception d'un bloc plumeur (BP), de colonnes de guidage (33) dans son mouvement de va et vient vertical, et des moyens assurant ledit mouvement.

Ainsi, dans la partie basse de la structure support, est disposé un ensemble moteur (34) associé à un mécanisme à vilebrequin (35), dont la tige (35.1) est associée à une de ses extrémités à une roue (36), et l'autre extrémité (35.2) associée à la structure support (37) ou chariot (39) du bloc plumeur.

La mise en rotation de la roue permet ainsi de définir un point mort haut et un point mort bas, correspondant aux phases d'élévation maximum du bloc plumeur, et d'abaissement maximum de celui-ci.

Les différentes hauteurs sont établies de manière judicieuse pour s'adapter à la taille des volailles suspendues et notamment des canards, de telle sorte que les blocs plumeurs puissent aller sensiblement au delà des extrémités de la tête et du croupion du canard.

Lesdits supports établis sous forme de barres de guidage (33) sont fixés sur une plateforme support (38) disposée intérieurement dans le carter de protection (31), et permettent le coulissement d'un chariot (39) du type décrit précédemment sur lequel est positionné un support (40) du bloc plumeur.

Chaque carter fixé en position verticale par rapport au bâti à l'aide d'une équerre de liaison (41) fixée sur sa face externe (31.1) vient en appui sur un montant fixe (42) solidaire du bâti, avec un moyen de fixation (43) du type écrou à ailettes.

Un autre profilé (44) est disposé sur la face interne (31.2) du carter et constitue un moyen de butée contre un autre montant vertical (45) solidaire du bâti en définissant l'amplitude de débattement angulaire (?) du carter par rapport à son support.

Le basculement du carter a essentiellement pour but de rendre d'accès aisé le bloc plumeur, et notamment ses différents disques assurant le passage et la saisie des plumes de la volaille.

Un moyen moteur (34) est fixé sur l'axe de la roue, associé au vilebrequin et permet ainsi un mouvement continu de va et vient de l'ensemble en montée et descente.

L'ensemble des blocs plumeurs est avantageusement selon l'invention associé à une seule zone d'aspiration (non représentée au dessins, étant de type connu) permettant, d'une part, d'éjecter les produits saisis et, d'autre part, d'assurer un plaquage de la volaille ou canard contre les grilles du bloc plumeur.

Il convient maintenant de décrire les moyens permettant la tenue et la présentation de volailles face à cette batterie de blocs plumeurs.

En se référant aux dessins, on voit que les volailles sont maintenues en suspension par leurs pattes à l'aide de griffes (G) qui sont acheminées par un convoyeur (46) devant la batterie de blocs plumeurs, les griffes étant de toute configuration connue.

Sous-jacent au support de pattes, est disposée une chaîne (47) susceptible de maintenir en position le cou de la volaille dans une position verticale, et avantageusement dans une situation de tension de celle-ci.

Plus particulièrement, la chaîne est une chaîne sans fin tournant autour de deux poulies (48) disposées selon un écartement approprié, la chaîne étant susceptible de recevoir sur toute sa longueur à intervalles appropriés, des membranes (49) élastiquement déformables de forme triangulaire. Ces membranes définissent un espace (e) entre elles pour autoriser l'engagement et le pré-positionnement des cous de volailles. Pour assurer une tenue de celles-ci, il est rapporté en regard des différentes membranes un guide (50) profilé définissant avec les membranes des espaces de maintien des cous des volailles.

Les différentes membranes sont fixées par vissage (51) ou autrement à la chaîne sans fin selon un pas pré-établi.

Le guide (50) profilé est fixé de toute manière appropriée sur la structure du bâti, en débordant de part et d'autre de la chaîne (47) pour permettre l'introduction des volailles et l'évacuation de celles -ci, le guide (50) présentant ainsi un évasement ou ouverture permettant et facilitant l'introduction desdites volailles ou leur évacuation de ladite chaîne. Vers la roue avant d'introduction des volailles sur la chaîne, est disposée radialement une pluralité de doigts (62) escamotables pouvant constituer des moyens de contrôle de positionnement des volailles dans les espaces (e) précités.

Selon une autre caractéristique, la chaîne sans fin support des membranes reçoit dans sa partie inférieure un bras support (52) susceptible d'être agencé avec une pièce d'appui (53) venant contourner la partie de derrière de la tête de la volaille pour assurer un complément de tenue de celle-ci.

Selon une autre disposition importante de l'invention, l'écartement entre la zone de suspension par les pattes des volailles et la zone de maintien de celles-ci par leur cou, est variable et réglable pour s'adapter à la nature et à la taille des volailles traitées.

Une transmission commune (54) assure le fonctionnement en synchronisme permettant l'avancée régulière des volailles maintenues par leurs pattes et leur cou.

Selon une autre disposition avantageuse, il est prévu à partir de la structure de la chaîne support des moyens de maintien des volailles par le cou, l'utilisation d'un portique complémentaire (55) recevant horizontalement à des hauteurs différentes des barres de maintien (56 - 57) des volailles, pour éviter leur débattement latéral. Ces barres sont établies sur la longueur de l'installation.

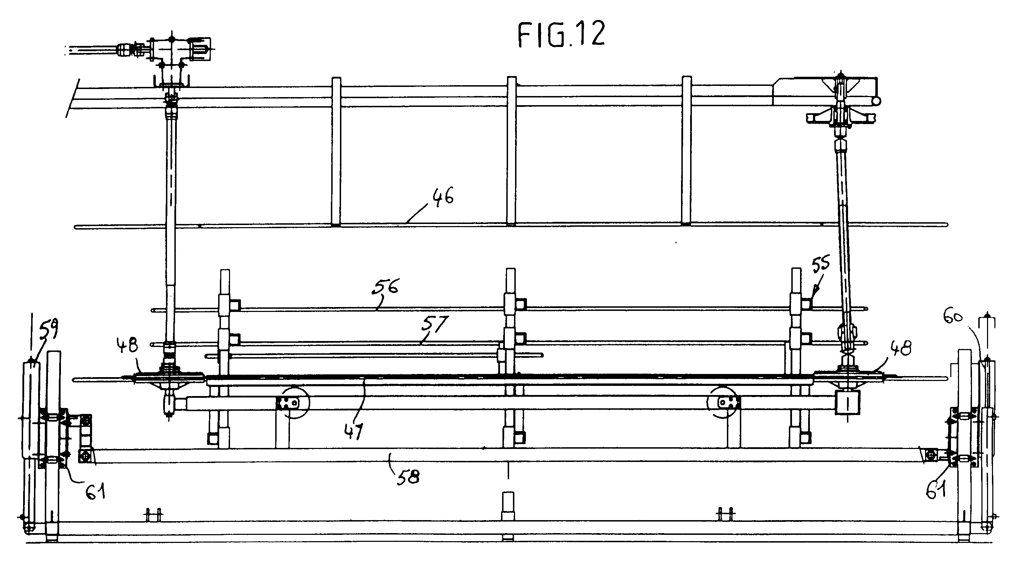

En se référant à la figure 12, il est prévu dans la partie basse de celle-ci de disposer la structure support de la chaîne de tenue des cous de volailles sur une plateforme (58) réglable en position. Cette plateforme est aménagée à ses extrémités en amont et en aval de la chaîne de présentation des volailles avec des ensembles à vérins (59 - 60) permettant, par une commande appropriée, l'élévation réglable de la plateforme, cette élévation pouvant être différente en amont ou en aval, pour assurer la mise en tension des volailles. Aux extrémités de la plateforme, sont disposées des colonnes de guidage vertical sur lesquelles se déplacent des chariots (61) associés aux vérins et pouvant être commandés indépendamment ou simultanément à des hauteurs différentes. On peut donc ainsi adapter la position de la plateforme support de la chaîne de maintien des cous de volailles par rapport à la chaîne de suspension des volailles, pour tenir compte des tailles des volailles traitées, d'une part, et, d'autre part, créer un effet de tension d'amont en aval pour assurer un positionnement ferme de la volaille qui passe devant les blocs plumeurs.

La commande en fonctionnement de ces vérins peut s'effectuer à l'aide d'une pompe à mains ou équivalent.

Dans une mise en oeuvre avantageuse de l'invention, une telle installation comprend une batterie de quatre blocs plumeurs pouvant fonctionner en synchronisme ou non.

L'utilisation de ces quatre blocs permet de traiter dans les meilleures conditions possibles le plumage des volailles, chaque bloc plumeur ayant un mouvement de va et vient pendant la phase de passage de la volaille devant lui.

Les blocs plumeurs travaillent de haut en bas et de bas en haut en assurant un passage et l'enlèvement de plumes et duvets de la volaille qui sont éjectés par l'arrière, à l'aide du système de ventilation et d'aspiration connu.

Une telle installation permet d'obtenir un traitement des volailles dans d'excellentes conditions, celles-ci de par leur mise en tension, offrant une surface de traitement très ferme pour les blocs plumeurs.

Sans sortir du cadre de l'invention, le nombre de blocs plumeurs peut varier selon les besoins.

Les avantages ressortent bien de l'invention. On souligne la fiabilité de l'installation, sa simplicité de fonctionnement et de réglage, et la capacité de production très nettement améliorée par rapport au système actuel, puisque cette installation permet de traiter 1.800 volailles à l'heure, en obtenant une qualité de traitement non atteinte à ce jour à la connaissance du Demandeur.

## Revendications

1. Installation pour le plumage à sec des volailles comprenant un bloc plumeur (BP) et une chaîne de distribution et de maintien en suspension de volailles par leur pattes, et sous-jacente une chaîne (47) de maintien des cous de volailles fonctionnant en synchronisme, caractérisée en ce qu'elle comprend des moyens (49, 53) disposés à partir de la chaîne (47) de maintien des cous de volailles permettant le positionnement et la mise en tension des volailles, ladite chaîne de maintien des cous de volailles (47) étant agencée avec des moyens complémentaires (56, 57) assurant la tenue des dites volailles en évitant leur débattement latéral, et ce qu'une batterie du bloc plumeur (BP) incluant une grille (30) de protection et d'appui des volailles et disposée en regard des chaînes de maintien et de suspension des volailles, chaque bloc plumeur étant animé d'un mouvement vertical de va-et-vient, le défilement des volailles sous l'action des chaînes devant la batterie des blocs plumeurs étant susceptible en plusieurs phases successives d'assurer un plumage quasi complet de chaque volaille présentée.

2. Installation selon la revendication 1, caractérisée en ce que chaque bloc plumeur est monté sur un chariot déplaçable en va et vient le long d'un bâti support, avec une capacité d'orientation angulaire contrôlée et limitée.

3. Installation selon les revendications 1 et 2, caractérisée en ce qu'elle comprend une structure formant châssis (1), susceptible de recevoir un portique (10) agencé pour autoriser la suspension d'un bloc plumeur (BP), ainsi que sa mise à niveau en hauteur en fonction de la position des volailles à plumer, et en ce que ledit portique est agencé pour autoriser le déplacement en hauteur, contrôlé et limité, d'un chariot (9), selon un mouvement (M1), le chariot comprenant des moyens permettant le maintien et la suspension d'une ossature (8) support du bloc plumeur.

4. Installation, selon la revendication 3, caractérisée en ce que le portique (10) est agencé avec des moyens (14 - 18) assurant la tenue et positionnement d'un vérin (17) en position verticale, la tige (17.2) du vérin étant accouplée au chariot (9), ledit chariot étant monté coulissant sur des barres de guidage (15) disposées verticalement sur le portique, en étant maintenues par des moyens support (14.1et 16) fixés à ce dernier, et en ce que le développement de la tige de vérin permet de définir, en position, l'emplacement des blocs plumeurs par rapport à la volaille à plumer.

5. Installation, selon la revendication 4, caractérisée en ce que le chariot (9) comprend une semelle (19) profilée formant dans sa partie supérieure plateforme (19.1), et agencée avec des ouvertures (19.2) des passages de barres de guidage (15), ladite plateforme présentant, dans sa partie arrière, un talon (19.3) recevant, à articulation de liaison, l'extrémité de la tige du vérin, ladite semelle présentant sur sa face avant une plaque de prolongement (19.4) vers le bas, aménagée avec des lumières oblongues (19.5) autorisant l'ajustement et le positionnement de l'ossature portante (8) du bloc plumeur, et en ce que ladite semelle présente un déport (19.6) par rapport au plan de ladite plaque (19.4), pour autoriser le positionnement d'un moyen (M2) de réglage en position de l'ossature portante du bloc plumeur par rapport à ladite semelle.

6. Installation, selon la revendication 5, caractérisée en ce que l'ossature portante comprend un étrier (21), profilé en "U", autorisant la fixation d'un conteneur support (22) du bloc plumeur, ledit étrier présentant sur sa face supérieure une ouverture filetée en regard du déport (19.6) formé sur la semelle, autorisant l'insertion du deuxième moyen de réglage (M2) défini par une vis (23) avec volant de manoeuvre.

7. Installation, selon l'une quelconque des revendications 5 et 6, caractérisée en ce que l'ossature portante comprend un étrier (21) présentant une plaque de fond (24) avec des ouvertures autorisant le passage d'axe de liaison (25) s'ajustant dans les ouvertures oblongues (19.5) formées sur la semelle, et en ce que les ailes de l'étrier présentent des ouvertures (21.3) pour la fixation d'une plaque de liaison (26), ladite plaque étant fixée à l'ossature (8) par tous moyens appropriés.

8. Installation, selon la revendication 7, caractérisée en ce que la plaque (26) présente une lumière oblongue curviligne (26.4) autorisant le passage d'une poignée de liaison de blocage (27) permettant une orientation limitée et contrôlée de I'ossature support du bloc plumeur, par rapport au portique, selon un mouvement (M3).

9. Installation, selon les revendications 1 et 2, caractérisée en ce qu'elle comprend une batterie de plusieurs blocs plumeurs disposés en alignement en regard des chaînes de convoyage, de suspension et de maintien des volailles par leurs pattes et par leur cou,
et en ce que lesdits blocs plumeurs (BP1 - BP2 - BP3 - BP4) sont montés sur une structure de bâti (1), chaque bloc plumeur étant disposé à l'intérieur d'un carter de protection (31) profilé autorisant son insertion et le positionnement des moyens d'entraînement dans un mouvement de haut en bas en va et vient en synchronisation ou non avec l'avance des chaînes de convoyage.

10. Installation, selon la revendication 9, caractérisée en ce que chaque carter (31) est monté à articulation par rapport à un axe support (32) et reçoit, dans sa partie supérieure, à position fixe verticalement, des colonnes de guidage (33) autorisant le coulissement d'un chariot (39) associé à un support (40) du bloc plumeur (BP) et, dans sa partie basse, le carter reçoit le mécanisme à vilebrequin (35) comprenant une roue (36) entraînée par un moteur (34),
et en ce qu'une tige (35.1)est associée à la roue par une extrémité et au chariot (39) par l'autre extrémité,
et en ce que la mise en rotation de la roue définit un point mort haut et un point mort bas correspondant aux phases d'élévation et d'abaissement maximum du bloc plumeur.

11. Installation, selon les revendications 9 et 10, caractérisée en ce que chaque carter est orientable angulairement par rapport à un axe (32), le carter étant en position verticale par rapport au bâti à l'aide d'une équerre de liaison (41) fixée sur sa face externe pour venir en appui contre un montant fixe (42) à l'aide d'un moyen de fixation (43),
et en ce qu'un autre profilé (44) est disposé sur la face interne du carter en constituant un moyen de butée complémentaire contre une autre partie fixe du bâti, I'équerre de liaison et le profilé (44) étant décalés angulairement pour définir I'amplitude d'orientation du carter par rapport à son support.

12. Installation, selon les revendications 9 et 10, caractérisée en ce que la chaîne (46) présente des griffes (G) de suspension des volailles par leurs pattes et sous-jacente une chaîne (47) agencée pour assurer le maintien des volailles par leur cou,
et en ce que la chaîne (47) est une chaîne sans fin tournant autour de deux poulies (48) et recevant des membranes (49) élastiquement déformables de forme triangulaire pour définir un espace (e) entre elles et autoriser l'engagement et le prépositionnement des cous de volailles, en combinaison avec un guide (50) profilé disposé en regard de la zone de passage des volailles sur la chaîne.

13. Installation, selon la revendication 12, caractérisée en ce que la roue avant de la chaîne (47) comprend des doigts escamotables constituant des moyens de contrôle et de positionnement des volailles dans les espaces (e) précités.

14. Installation, selon la revendication 12, caractérisée en ce que la chaîne (47) support des membranes reçoit, dans sa partie inférieure, un bras support (52) agencé avec une pièce d'appui (53) contournant la partie de derrière de la tête de volaille.

15. Installation, selon la revendication 12, caractérisée en ce que la structure support de la chaîne (47) de tenue des cous de volailles est montée sur une plateforme (58) réglable en position à ses extrémités en amont et en aval du sens de l'installation avec des ensembles de vérins (59 - 60) permettant le réglage et l'élévation de la plateforme par rapport à la chaîne de maintien et de suspension des volailles par leurs pattes en assurant ainsi la mise en tension des volailles.

16. Installation, selon la revendication 15, caractérisée en ce que, aux extrémités de la plateforme (58), sont disposées des colonnes de guidage verticales sur lesquelles se déplacent des chariots (61) associés aux vérins (59 et 60), lesdits chariots, dans leur déplacement, entraînant celui de la plateforme.

17. Installation, selon l'une quelconque des revendications 9 à 16, caractérisée en ce qu'elle comprend une batterie de quatre blocs plumeurs fonctionnant en synchronisme ou non, et permettant dans un mouvement de va et vient vertical successif et lors de la présentation de chaque volaille mise en suspension entre les chaînes (46 et 47), une aspiration et contact des volailles contre le bloc plumeur en vue d'une opération de plumage à sec.

## Claims

1. System for dry-plucking poultry comprising a plucking unit (BP) and a chain for transporting and suspending poultry by its feet and, underneath this, a chain (47) for securing the necks of poultry which operates in synchronism, characterised in that it comprises means (49, 53), mounted on the chain (47) for securing the necks of poultry making it possible to position and tension the poultry, said chain (47) for securing the necks of poultry being devised with additional means (56,57) ensuring gripping of said poultry and preventing their lateral deflection and in that a set of several plucking units (BP) including a poultry support and guard grid (30) is arranged opposite the chains for securing and suspending the poultry, each plucking unit being moved by a reciprocating vertical movement, the movement of the poultry under the effect of the chains past the set of plucking units being capable of ensuring almost complete plucking of each bird presented during several successive phases.

2. System as claimed in claim 1 characterised in that each plucking unit is mounted on a moving carriage that travels back and forth along a support frame and is capable of controlled, limited angular swivelling.

3. System as claimed in claims 1 and 2 characterised in that it comprises a structure forming a chassis (1) capable of accommodating a gantry (10) devised to allow suspension of a plucking unit (BP) and its levelling depending on the position of the poultry to be plucked and in that said gantry is devised to allow controlled, limited vertical displacement of a carriage (9) in accordance with movement (M1), the carriage comprising means making it possible to secure and suspend a framework (8) that supports the plucking unit.

4. System as claimed in claim 3 characterised in that the gantry (10) is devised with means (14-18) that ensure the retention and vertical positioning of an actuating cylinder (17), the rod (17.2) of the actuating cylinder being connected to the carriage (9), said carriage being mounted so that it slides along guide bars (15) arranged vertically on the gantry and being secured by support means (14.1 and 16) fixed to the latter and in that the stroke of the rod of the actuating cylinder makes it possible to define the position of the plucking units relative to the poultry to be plucked.

5. System as claimed in claim 4 characterised in that the carriage (9) comprises a profiled base (19) the upper part of which forms a platform (19.1) and designed with openings (19.2) providing clearance for guide bars (15), the rear part of said platform having a heel (19.3) that accommodates the connected, articulated end of the rod of the actuating cylinder, the front face of said base having a downward extension plate (19.4) made with oblong slots (19.5) making it possible to adjust the positioning of the framework (8) that supports the plucking unit and in that said base has an offset (19.6) with respect to the plane of said plate (19.4) to allow positioning of means (M2) of adjusting the position of the framework that supports the plucking unit with respect to said base.

6. System as claimed in claim 5 characterised in that the supporting framework comprises a "U" stirrup (21) making it possible to attach a support container (22) of the plucking unit, the upper face of said stirrup having a threaded opening opposite the offset (19.6) formed on the base allowing insertion of the second means of adjustment (M2) defined by a screw (23) with an operating handwheel.

7. System as claimed in either of claims 5 and 6 characterised in that the supporting framework comprises a stirrup (21) having a bottom plate (24) with openings providing clearance for connecting pins (25) that fit into the oblong openings (19.5) formed on the base and in that the sides of the stirrup have openings (21.3) to attach a connecting plate (26), said plate being attached to framework (8) by any appropriate means.

8. System as claimed in claim 7 characterised in that plate (26) has a curved oblong slot (26.4) providing clearance for a locking connecting handle (27) allowing limited, controlled swivelling of the framework that supports the plucking unit with respect to the gantry according to movement (M3).

9. System as claimed in claims 1 and 2 characterised in that it comprises a set of several plucking units arranged in alignment opposite the chains for conveying, suspending and securing the poultry by its feet and neck,
and in that said plucking units (BP1-BP2-BP3-BP4) are mounted on a chassis structure (1), each plucking unit being enclosed inside a shaped protective housing (31) allowing its insertion and positioning of the drive means for obtaining a reciprocating up-and-down movement in synchronism or not in synchronism with the forward motion of the conveyor chains.

10. System as claimed in claim 9 characterised in that each housing (31) is fitted so that it is articulated relative to a support shaft (32) and its upper part accommodates, in a vertically fixed position, guide columns (33) that allow sliding of a carriage (39) associated with a support (40) of the plucking unit (BP) and the lower part of the housing accommodates the crankshaft mechanism (35) comprising a wheel (36) driven by a motor (34),
and in that one end of a rod (35.1) is associated with the wheel and the other end is associated with the carriage (39).
and in that rotation of the wheel defines a top dead centre and a bottom dead centre corresponding to the highest position and lowest position of the plucking unit.

11. System as claimed in claims 9 and 10 characterised in that each housing is angularly swivelable relative to a shaft (32), the housing being in a vertical position relative to the frame with the aid of a connecting bracket (41) attached to its outside face in order to press against a fixed upright (42) with the help of a means of fastening (43),
and in that another profile (44) is placed on the inside face of the housing and constitutes an additional means of limit stopping against another fixed part of the frame, the connecting bracket and profile (44) being angularly offset in order to define the swivel amplitude of the housing relative to its support.

12. System as claimed in claims 9 and 10 characterised in that the chain (46) has grippers (G) for suspending poultry by its feet and, underneath, a chain (47) devised to secure poultry by its neck,
and in that chain (47) is an endless chain that is wound around two pulleys (48) and accommodates elastically deformable membranes (49) of triangular shape in order to define a gap (e) between the membranes and allow placing and initial positioning of the neck of the poultry in combination with a profiled guide (50) placed opposite the area through which the poultry passes on the chain.

13. System as claimed in claim 12 characterised in that the front wheel of the chain (47) comprises retractable studs constituting means of controlling and positioning the poultry in the above mentioned gaps (e).

14. System as claimed in claim 12 characterised in that the lower part of the chain (47) that supports the membranes accommodates a support arm (52) devised with a support piece (53) that wraps round the back of the neck of the poultry.

15. System as claimed in claim 12 characterised in that the support structure for the chain (47) that retains the neck of the poultry is mounted on a platform (58) of which the position can be adjusted at its ends upstream and downstream in the direction of the system by a number of actuating cylinders (59-60) allowing adjustment and elevation of the platform with respect to the chain for securing and suspending the poultry by its feet, thus ensuring tensioning of the poultry.

16. System as claimed in claim 15 characterised in that, at the ends of platform (58), there are vertical guide columns on which carriages (61) move that are associated with actuating cylinders (59 and 60), said carriages moving the platform as they move.

17. System as claimed in any of claims 9 to 16 characterised in that it comprises a set of four plucking units that may or may not operate in synchronism and allow, during successive vertical reciprocating movements as each bird suspended between chains (46 and 47) is presented, suction and contact of the poultry against the plucking unit in order to obtain dry plucking.

## Patentansprüche

1. Anlage zum Trockenrupfen von Geflügel bestehend aus einem Rupfblock (BP) und einer Steuer- und Haltekette von an den Beinen aufgehängtem Geflügel, und darunter aus einer synchron arbeitenden Haltekette (47) für Geflügelhälse, dadurch gekennzeichnet, daß die Anlage an der Haltekette (47) für Geflügelhälse Einrichtungen (49, 53) zum Positionieren und Spannen des Geflügels besitzt, wobei die Geflügelhals-Haltekette (47) zusätzliche Einrichtungen (56, 57) für den Halt des Geflügels unter Verhinderung eines seitlichen Ausschlags aufweist,
und dadurch gekennzeichnet, daß eine Rupfblockbatterie (BP) einschließlich eines Schutz- und Auflagegitters (30) für das Geflügel gegenüber den Geflügelhalte- und Aufhängeketten angeordnet ist, wobei jeder Rupfblock eine senkrechte Hin- und Herbewegung beschreibt, während das von den Ketten bewirkte Vorbeiführen des Geflügels vor der Rupfblockbatterie geeignet ist, in mehreren aufeinanderfolgenden Schritten ein nahezu vollständiges Rupfen jedes vorgelegten Geflügels zu gewährleisten.

2. Anlage nach Anspruch 1, dadurch gekennzeichnet, daß jeder Rupfblock auf einem Schlitten angebracht ist, der sich bei kontrollierter und begrenzter Winkelausrichtung längs eines Tragegestells hin und her bewegt.

3. Anlage nach Anspruch 1 und 2, dadurch gekennzeichnet, daß sie eine rahmenbildende Struktur (1) umfaßt, die geeignet ist, eine Portalkonstruktion (10) für die Aufhängung eines Rupfblocks (BP) sowie dessen Höhenregulierung je nach Position des zu rupfenden Geflügels zu ermöglichen, und dadurch gekennzeichnet, daß dieses Portal so ausgelegt ist, um die kontrollierte und begrenzte Höhenverschiebung eines Schlittens (9) gemäß einer Bewegung (M1) zu gestatten, wobei der Schlitten Enrichtungen aufweist, die den Halt und die Aufhängung eines den Rumpfblock tragenden Gerüstes (8) ermöglichen.

4. Anlage nach Anspruch 3, dadurch gekennzeichnet, daß die Portalkonstruktion (10) Einrichtungen (14-18) für den Halt und die Positionierung eines Zylinders (17) in senkrechter Stellung besitzt, wobei die Stange (17.2) des Zylinders an den Schlitten (9) angekoppelt ist, der gleitend auf Führungsstäben (15) gelagert ist, die senkrecht am Portal angebracht sind und durch an diesem befestigte Halterungen (14.1 und 16) in Stellung gehalten werden, und dadurch gekennzeichnet, daß die Hubstrecke der Zylinderstange den Standort der Rupfblöcke gegenüber dem zu rupfenden Geflügel definiert.

5. Anlage nach Anspruch 4, dadurch gekennzeichnet, daß der Schlitten (9) eine Profilsohle (19) besitzt, die im oberen Teil eine Art Plattform (19.1) bildet und mit Öffnungen (19.2) für die Durchführung von Führungsstäben (15) ausgebildet ist, wobei die Plattform im hinteren Teil einen Absatz (19.3) aufweist, der in gelenkiger Verbindung das Ende der Zylinderstange aufnimmt, wobei die Sohle auf der Vorderseite eine Verlängerungsplatte (19.4) nach unten aufweist, die längliche Schlitze (19.5) für das Einpassen und Positionieren des Rupfblock-Tragegerüsts (8) besitzt, und dadurch gekennzeichnet, daß diese Sohle im Verhältnis zur Ebene der Platte (19.4) einen Vorsprung (19.6) für die Positionierung einer Einrichtung (M2) zur Lageregulierung des Rupfblock-Tragegerüsts gegenüber der besagten Sohle aufweist.

6. Anlage nach Anspruch 5, dadurch gekennzeichnet, daß das Tragegerüst einen "U"-förmig profilierten Bügel (21) für die Befestigung eines Tragebehälters (22) des Rupfblocks umfaßt, wobei der Bügel auf der Oberseite gegenüber dem an der Sohle ausgebildeten Vorsprung (19.6) eine Gewindeöffnung für die Einführung der zweiten Stellvorkehrung (M2) aufweist, die aus einer Schraube (23) mit Bedienungsrad besteht.

7. Anlage nach Anspruch 5 und 6, dadurch gekennzeichnet, daß das Tragegerüst einen Bügel (21) besitzt, der eine Bodenplatte (24) mit Öffnungen für die Durchführung von Verbindungsachsen (25) aufweist, die sich in die länglichen Öffnungen (19.5) an der Sohle einpaßen, und dadurch gekennzeichnet, daß die Seitenteile des Bügels Öffnungen (21.3) für die Befestigung einer Verbindungsplatte (26) aufweisen, wobei diese Platte durch geeignete Vorkehrungen an dem Gerüst (8) befestigt ist.

8. Anlage nach Anspruch 7, dadurch gekennzeichnet, daß die Platte (26) einen kurvenförmigen länglichen Schlitz (26.4) für die Durchführung eines sperrenden Verbindungsgriffs (27) aufweist, der gemäß einer Bewegung (M3) eine begrenzte und kontrollierte Ausrichtung des Rupfblock-Tragegerüstes gegenüber der Portalkonstruktion ermöglicht.

9. Anlage nach Anspruch 1 und 2, dadurch gekennzeichnet, daß sie eine Batterie aus mehreren Rupfblöcken umfaßt, die fluchtend gegenüber den Transport-, Aufhäng- und Halteketten des Geflügels (an Beinen und Hals) angeordnet sind, und dadurch gekennzeichnet, daß diese Rupfblöcke (BP1 - BP2 - BP3 - BP4) auf einer Rahmenstruktur (1) angebracht sind, wobei jeder Rupfblock innerhalb eines profilierten Schutzgehäuses (31) untergebracht ist, das dessen Einführung und die Positionierung der Antriebsmittel in einer mit dem Vorlauf der Förderkette synchronisierten bzw. unsynchronisierten Auf- und Abbewegung ermöglicht.

10. Anlage nach Anspruch 9, dadurch gekennzeichnet, daß jedes Gehäuse (31) im Verhältnis zu einer Stützachse (32) gelenkig gelagert ist und im oberen Teil in senkrecht ortsfester Position Führungssäulen (33) für die Gleitbewegung eines mit einem Träger (40) des Rupfblocks (BP) in Verbindung stehenden Schlittens (39) aufnimmt, wobei im unteren Teil des Gehäuses der Kurbelwellenmechanismus (35) mit einem von einem Motor (34) angetriebenen Rad (36) vorgesehen ist,
und dadurch gekennzeichnet, daß eine Stange (35,1) an einem Ende mit dem Rad und am anderen Ende mit dem Schlitten (39) verbunden ist,
und dadurch gekennzeichnet, daß die Drehbewegung des Rades einen oberen und einen unteren Totpunkt beschreibt, die jeweils der maximalen Aufwärts- bzw. Abwärtsbewegung des Rupfblocks entsprechen.

11. Anlage nach Anspruch 9 und 10, dadurch gekennzeichnet, daß jedes Gehäuse gegenüber einer Achse (32) winkelig ausrichtbar ist, wobei das Gehäuse im Verhältnis zum Rahmengestell mit Hilfe eines Verbindungswinkels (41), der an der Außenseite befestigt ist, um mittels einer Befestigungseinrichtung (43) an einem ortsfesten Ständer (42) in Anschlag zu kommen, eine senkrechte Stellung einnimmt,
und dadurch gekennzeichnet, daß ein anderes Profilteil (44) an der Innenseite des Gehäuses angeordnet ist und eine zusatzliche Anschlagvorkehrung gegen einen anderen ortsfesten Teil des Rahmengestells bildet, wobei der Verbindungswinkel und das Profilteil (44) winkelig versetzt sind, um die Schwenkamplitude des Gehäuses gegenüber seiner Auflage zu beschreiben.

12. Anlage nach Anspruch 9 und 10, dadurch gekennzeichnet, daß die Kette (46) Klauen (G) zum Aufhängen des Geflügels an den Beinen und darunterliegend eine Kette (47) zum Festhalten des Geflügels am Hals aufweist,
und dadurch gekennzeichnet, daß es sich bei der Kette (47) um eine Endloskette handelt, die um zwei Antriebsscheiben (48) herumläuft und elastisch verformbare, dreieckige Membrane besitzt, um jeweils einen Zwischenraum (e) zu beschreiben und in Verbindung mit einer Profilführung (50), die gegenüber dem Durchlaufbereich des Geflügels an der Kette angebracht ist, das Einführen und Vorpositionieren der Geflügelhälse zu ermöglichen.

13. Anlage nach Anspruch 12, dadurch gekennzeichnet, daß das vordere Rad der Kette (47) einziehbare Stifte besitzt, die als Kontroll- und Positioniereinrichtungen des Geflügels in den vorgenannten Zwischenräumen (e) dienen.

14. Anlage nach Anspruch 12, dadurch gekennzeichnet, daß die Trägerkette (47) der Membrane im unteren Teil einen Stützarm (52) aufnimmt, der mit einer Abstützung (53) ausgebildet ist, die den hinteren Teil des Geflügelkopfes umgibt.

15. Anlage nach Anspruch 12, dadurch gekennzeichnet, daß die Trägerstruktur der Haltekette (47) für die Geflügelhälse auf einer Plattform (58) angebracht ist, die an ihren Enden vor und nach der Laufrichtung der Anlage positionsverstellbar ist und Zylinderbaugruppen (59-60) für die Einstellung und Erhöhung der Plattform gegenüber der Halte- und Aufhängekette des Geflügels an den Beinen besitzt und dadurch die Geflügelspannung gewährleistet.

16. Anlage nach Anspruch 15, dadurch gekennzeichnet, daß an den Enden der Plattform (58) senkrechte Führungssäulen angeordnet sind, an denen mit den Zylindern (59 und 60) gekoppelte Schlitten (61) entlanggleiten, wobei die Schlitten bei ihrer Verschiebung die Mitbewegung der Plattform bewirken.

17. Anlage nach einem der Ansprüche 9-16, dadurch gekennzeichnet, daß sie eine Batterie aus vier Rupfblöcken umfaßt, die synchronisiert bzw. unsynchronisiert arbeiten und in einer kontinuierlichen senkrechten Hin- und Herbewegung und unter Vorlage jedes einzelnen zwischen den Ketten (46 und 47) aufgehängten Geflügels eine kontakterzeugende Ansaugung des Geflügels an den Rupfblock zwecks Trockenrupfvorgang ermöglichen.
